# EUROPEAN PATENT SPECIFICATION

(11) **EP 4 447 665 B1**
(45) Date of publication and mention of the grant of the patent: **22.04.2026**
(21) Application number: 22836131.7
(22) Date of filing: 13.12.2022
(51) Int. Cl.: A01N 25/02, A01N 25/22, A01N 43/40, A01P 3/00, A01N 25/04, A01N 37/02, A01N 37/04, A01N 37/06, A01N 37/36

(54) **FUNGICIDAL COMPOSITIONS**
FUNGIZIDE ZUSAMMENSETZUNGEN
COMPOSITIONS FONGICIDES

(30) Priority: 17.12.2021 EP 21215713
(43) Date of publication of application: 23.10.2024
(73) Proprietor: Syngenta Crop Protection AG, 4058 Basel (CH)
(72) Inventor: BOYLES, Claire, Bracknell Berkshire RG42 6EY (GB); WESLEY, Robin, Bracknell Berkshire RG42 6EY (GB)
(74) Representative: SYNGENTA IP
(86) International application number: PCT/EP2022/085701
(87) International publication number: WO 2023/110928

(56) References cited:
- EP-A1- 3 620 053
- WO-A1-2018/204434
- WO-A1-2020/061708
- WO-A1-2021/172390

## Description

The present invention relates to a composition comprising the fungicidal active ingredient florylpicoxamid. Such compositions may be useful in agriculture in combating, preventing or controlling infestation by phytopathogenic diseases on crop plants.

WO 2016/122802 and WO 2016/109257 disclose certain picolinamide compounds and their uses as fungicides, including (1S)-2,2-bis(4-fluorophenyl)-1-methylethyl N-{[3-(acetyloxy)-4-methoxy-2-pyridyl]carbonyl}-L-alaninate, ie, florylpicoxamid (CAS no. 1961312-55-9). Florylpicoxamid has been shown to be particularly effective in the control of wheat leaf blotch disease caused by *Mycosphaerella graminicola* (*Septoria tritici*), as well as other fungal pathogens. WO 2018/204435, WO 2018/204436, WO 2018/204437, WO 2019/042800 and WO 2019/101580 disclose certain fungicidal compositions comprising florylpicoxamid in combination with another fungicidal active ingredient.

WO 2021/172390 discloses fungicidal compositions comprising a dicarboxylic acid. EP 3 620 053 discloses that florylpicoxamid can be converted into physiologically acceptable salts, eg, from organic acids such as lactic acid, succinic acid, citric acid, benzoic acid, cinnamic acid, maleic acid, fumaric acid, tartaric acid, sorbic acid and oxalic acid. WO 2020/061708 discloses compositions comprising florylpicoxamid and certain organic acids. WO 2018/204434 discloses the use of (*S*)-1,1-bis(4-fluorophenyl)propan-2-yl(3-acetoxy-4-methoxypicolinoyl)-L-alaninate to control fungal diseases in row crops.

It has been found that in certain florylpicoxamid-containing compositions, in particular those which are emulsion concentrates, that florylpicoxamid may undergo chemical degradation which can negatively impact the viability of an agrochemical formulation containing this active ingredient. Accordingly, means to limit or prevent such chemical degradation of florylpicoxamid have been sought.

According to the present invention, there is provided a fungicidal composition comprising:
(i) florylpicoxamid as a fungicidal active ingredient; and
(ii) an organic acid selected from an aliphatic C₂ to C₈ hydroxy mono-carboxylic acid or an aliphatic C₂ to C₈ di- or tri-carboxylic acid, or citric acid,
wherein the composition is an emulsifiable concentrate comprising an alkoxylated emulsifier.

Fungicidal compositions according to the invention have, for practical purposes, a very advantageous level of biological activity for protecting plants against diseases that are caused by fungi. In particular, for preventing or controlling the infestation of useful plants by a phytopathogen selected from (i) *Mycosphaerella graminicola* (*Septoria tritici*)*, Puccinia recondita* or *Puccinia striiformis* on cereal plants, in particular, wheat.

Surprisingly, it has now been found that the addition of an organic acid selected from an aliphatic C₃ to C₈ hydroxy mono-carboxylic acid or an aliphatic C₂ to C₈ di- or tri-carboxylic acid (eg, lactic acid) in combination with alkoxylated emulsifiers to certain emulsifiable concentrate compositions comprising florylpicoxamid, significantly improves the chemical stability of the florylpicoxamid active ingredient component (ie, eliminates or limits degradation) and thus the useful storage life and viability of fungicidal compositions for crop protection applications containing this active ingredient. Whilst presently not fully understood, it is believed that such chemical degradation of florylpicoxamid may be initiated by certain emulsifying agents (emulsifiers), or else by other ingredients present in such compositions, such as formulation inerts, other bioicidal active ingredients, or indeed small amounts of chemical impurities present in these ingredients, as the case may be in batch variability in the supply of raw materials for agrochemical formulation purposes.

Further according to the invention, there is provided an aqueous composition comprising the fungicidal composition according the invention, optionally further comprising one or more adjuvants or carriers.

Still further according to the invention, there is provided a method of controlling or preventing infestation of a crop of a useful plant by phytopathogenic microorganisms, wherein a fungicidally effective amount of a composition according to the invention is applied to the plants, to parts thereof or the locus thereof.

Even further according to the invention, there is provided the use of an organic acid selected from an aliphatic C₂ to C₈ hydroxy mono-carboxylic acid or an aliphatic C₂ to C₈ di- or tri-carboxylic acid as a chemical stabilisation agent for florylpicoxamid in a fungicidal emulsifiable concentrate composition wherein the organic acid is present at 0.02 to 1.5% by weight of the composition.

As used herein, the term "aliphatic C₂ to C₈ hydroxy mono-carboxylic acid " refers to a straight or branched hydrocarbon chain consisting solely of carbon and hydrogen atoms, having from two to eight carbon atoms, and which contains one carboxylic acid group and one or more hydroxy group substitutions (and preferably one hydroxy group). Examples, include, but are not limited to, glycolic acid (C₂), lactic acid (C₃), 2-hydroxy octanoic acid (Cs).

As used herein, the term "aliphatic C₂ to C₈ di- or tri-carboxylic acid" refers to a straight or branched hydrocarbon chain consisting solely of carbon and hydrogen atoms, having from two to eight carbon atoms, which may contain one double bond, and which contains two or three carboxylic acid groups. Examples, include, but are not limited to, oxalic acid (C₂), malonic acid (C₃), adipic acid (C₆), suberic acid (C₈), maleic acid (C₄).

The composition according to the invention is an emulsifiable concentrate (EC).

Preferably, the compositions according to the invention comprise the florylpicoxamid component at 1 to 10% by weight of florylpicoxamid, and more preferably, at 3 to 6% by weight of florylpicoxamid.

Preferably, the composition according to the invention comprises the organic acid present at 0.02 to 1.5% by weight of the composition, more preferably, at 0.02 to 0.2% by weight of the composition, and still more preferably at 0.02 to 0.1 % by weight of the composition.

In some embodiments of the invention, the aliphatic C₂ to C₈ hydroxy mono-carboxylic acid and aliphatic C₃ to C₈ di- or tri-carboxylic acid will have a linear carbon chain (not branched) and/or have a single hydroxy substituent. In some embodiments of the invention, the organic acid is an aliphatic C₂ to C₄ hydroxy mono-carboxylic acid, an aliphatic C₂ to C₆ di-carboxylic acid, or citric acid.

Preferably, the organic acid is selected from glycolic acid, oxalic acid, malonic acid, adipic acid, maleic acid, lactic acid, suberic acid, 2-hydroxyoctanoic acid, citric acid, succinic acid, fumaric acid, glutaric acid, pimelic acid, 2-hydroxyhexanoic acid, more preferably lactic acid or citric acid, and most preferably, lactic acid (2-hydroxypropanoic acid). Other organic acids which could be utilised, include malic acid or tartaric acid.

The composition according to the present invention is an emulsifiable concentrate (EC) formulation which may undergo dilution (eg, with water in a tank) prior to a spray application to a crop. The emulsifiable concentrate is a liquid formulation containing one or more fungicidal active ingredients, one or more solvents and one or more alkoxylated emulsifier In an emulsifiable concentrate according to the invention, preferably at least one of the one or more of the alkoxylated emulsifier is an ethoxylated emulsifier.

In a composition according to the invention (including an emulsifiable concentrate), the solvent may be selected from a fatty acid dimethyl amide (eg, C₆ to C₁₂ aliphatic chain), such as *N,N-*dimethyldecanamide, or an aromatic ester, such as methyl benzoate or benzyl acetate.

The composition according to the present invention may further comprise one or more additional ingredients selected from an anti-freeze agent, an anti-foam agent, a thickening agent, a biocide (preservative), a stabilizer, a pigment, a water-miscible solvent, a water-immiscible solvent and/or one or more additional non-ionic or ionic emulsifiers.

Organic solvents which may be used in accordance with the present invention include, but are not limited to, benzyl acetate (eg, Jeffsol^{®} AG 1705, Huntsman Corporation Australia Pty Ltd), methyl benzoate (Polynt S.p.A., Italy) or *N*,*N*-dimethyldecanamide (eg, HALLCOMID^{®} M-10, Stepan Company, USA).

Emulsifiers, which may be used in accordance with the present invention include, but are not limited to, a castor oil ethoxylate (eg, ALKAMULS^{®} EL-620, Solvay USA Inc, USA; SERVIROX OEG 59 E, KLK Kolb Specialties B.V., Netherlands) and polyoxyethylene sorbitan monolaurate (Tween^{®} 20, Croda).

A pesticide adjuvant may be defined as a substance present in a pesticidal composition (eg, a concentrated active ingredient formulation diluted in water in a tank for a foliar spray application on a crop), which improves fungicidal active ingredient performance, for example by facilitating the spreading of the active ingredient on a leaf surface or penetration into the leaf of the crop plant. Preferably, in a composition according to the invention (eg, as an emulsifiable concentrate or a tank mix preparation prepared from an emulsifiable concentrate), the adjuvant is selected from a mineral oil, a vegetable oil, an esterified vegetable oil, a methylated vegetable oil or an alkyl ester phosphate-based adjuvant. Otherwise, the adjuvant may be selected from 1,2-cyclohexane dicarboxylic acid di-isononyl ester (eg, Agnique^{®} AE 829, BASF Corp, USA).

Other commercially-available adjuvant products which may be tank-mixed to yield a spray formulation with the composition of the present invention include HASTEN^{™} (Victorian Chemical Co. Pty. Ltd. - blend of an esterified vegetable oil and non-ionic surfactants), OCHIMA^{®} (Syngenta - alkyl ester of phosphoric acid (EC formulation)), LEDNA^{™} (Polaquimia - EC formulation comprising a methyl ester of soybean oil), Atplus^{®} 463 (CRODA Europe Limited - 60% paraffin oil with surfactant blend), Actirob^{®} B (Bayer AG - rapeseed oil methyl ester (esterified vegetable oil)), Destiny^{®} HC (Winfield Solutions LLC - methylated soybean oil), DYNE-AMIC^{®} (HELENA - blend of (methylated) vegetable oil and organosilicone-based nonionic surfactants), FS Optique^{™} (GROWMARK, Inc - methyl ester of canola oil) and tris(2-ethylhexyl) phosphate (TEHP, CAS no. 78-42-2. Synergen^{™} TEHP (Clariant GmbH), Disflamoll^{®} TOF (Lanxess)).

An anti-foam agent is a chemical additive that reduces and hinders the formation of foam in a composition, such as a pesticidal formulation. Anti-foaming agents which may be used in accordance with the present invention include, but are not limited to, polydimethylsiloxanes (eg, XIAMETER^{™} ACP-1500, Dow, Inc; Antifoam MSA, Univar; Xiameter ACP-0001, Dow Brasil; Xiameter ACP-0100, Dow Chemical) or a silicone antifoam emulsion (eg, SAG 1572, Momentive Performance Materials Inc., USA).

The term "water-soluble emulsifying surfactant system" which may be used in accordance with the present invention means any emulsifying surfactant system which enables the forming of an oil in water emulsion when the emulsifiable concentrate is diluted with an aqueous solution. Such an emulsifying surfactant system may comprise one or more surfactants. The surfactants may be non-ionic, anionic, cationic or zwitterionic. Examples of particular suitable surfactants include, but are not limited to, alkyl polyglycosides, polyalkylene oxide block copolymers and polyaryl-phenyl ether phosphates. Alkyl polyglycosides include Agnique PG ("APG") 8107 (Cognis Corporation, Cincinnati, Ohio, USA) (an alkyl polyglycoside in which the alkyl group contains 8 to 10 carbon atoms and has an average degree of polymerization of 1.7), Agnique PG 9116 (Cognis Corporation, Cincinnati, Ohio, USA) (a 20 alkyl polyglycoside in which the alkyl group contains 9 to 11 carbon atoms and has an average degree of polymerization of 1.6) and Agnique PG 8105 (Cognis Corporation, Cincinnati, Ohio, USA) (an alkyl polyglycoside in which the alkyl group contains 8 to 10 carbon atoms and has an average degree of polymerization of 1.5). Polyalkylene oxide block copolymers can be di- and tri-block copolymers, such as ABA or BAB block copolymer or BA block copolymers. Examples include the Genapol PF series (Clariant), the Pluronic series (BASF), the Synperonic PE series (Uniqema), and the Toximul series (Stepan Chemical Co.). A group of ethylene oxide/propylene oxide block copolymers which may be used in the compositions of this invention are butyl-based poly(oxypropylene)/poly(oxyethylene)block copolymers having an average molecular weight in the range of 2400 to 3500, for example Toximul 8320, Stepan Chemical Co.). Suitable examples include Pluronic L10, Pluronic L44, Pluronic L63, Pluronic L64, Pluronic L84, Pluronic P104, Pluronic P105, Step-Flow 26, Toximul 8323 and Toximul 8320. Polyaryl-phenyl ether phosphates include ethoxylated tristyrylphenol phosphates such as Soprophor 35 3D33 (Rhodia), Soprophor 3D33 LN (Rhodia), Emulsogen 57 (Clariant), Agnique PE TSP-16A (BASF), Agrhospec 7822 (Rhodia), Dispersogen TP 160 (Clariant), Stepfac TP 160 (Stepan), Stepfac TSP-PE (Stepan). The degree of ethoxylation of the polyaryl-phenyl ether phosphates for this purpose is preferably between 8 and 20, more preferably between 14 and 18.

Examples of suitable solvents which may be used in accordance with the present invention include, but are not limited, to mixtures of aromatic hydrocarbons such as Aromatic/Solvesso 100, 150, 150ND,200 and 200ULN (Exxon Mobil Chemical), C4-C12 aliphatic methyl or ethyl esters (e.g. Steposo IC-25, Steposol C-40, Steposol C-42, Steposol C-48 and Steposol C-65 (Stepan), Agnique ME 610 and Aqnique ME810 (BASF)), methylated seed oil blends such as methylated soy bean oil, methyloleate / linoleate, palmitate, carboxylic acids (C4-C10),ethylesters (C4-C10), aliphatic mineral oils, and mixtures thereof.

Examples of suitable non-aqueous polar solvents (Hansen Solubility 5 Parameter (HSP) values greater than 2, in particular greater than 5 and more particularly between 5 and 15) include acetone, amyl acetate, butanol, benzyl alcohol, cetyl alcohol, dimethyl ether, propylene glycol, dipropylene glycol, diethylene glycol monomethyl ether, octanol, hallcomid M-8-10, hexylene glycol, cyclohexanol, ethyl lactate, ethyl alcohol, 2-ethyl hexanol, glycerol monoacetate, glycerol diacetate, glycerol triacetate, 3-hexanol, n-hexyl alcohol, isopropyl myristate, lactic acid 2-ethyl hexyl ester, lactic acid n-propyl ester, methyl alcohol, methyl n-amyl ketone, methyl isobutyl ketone, oleyl alcohol, propanol, tetrahydrofurfuryl alcohol, butyrolactone, chlorobenzene, diacetone alcohol, n-decanol, N, N-dimethyl decanamide, N, N-dimethyloctanamide, dimethyl lactamide, n-decyl alcohol, dipropyleneglycol monomethylether, ethylene glycol monobutyl ether, isobornyl acetate, isobutyl alcohol, mesityl oxide, methyl ethyl ketone, 2-methyl-2,4-pentanediol, N-octyl pyrrolidone, N-methyl pyrrolidone, n-octyl alcohol, oxo-decyl acetate, oxo-heptyl acetate, oxo-hexyl acetate, oxo-nonyl acetate, oxo-octyl acetate, oxo-tridecyl acetate, propylene glycol monomethyl ether, triethylene glycol, triethyl phosphate, lactic acid n-butyl ester, lactic acid ethyl ester, dodecyl pyrrolidone, N, N-dimethyl acetamide, propylene carbonate and mixtures thereof. In particular, the non-aqueous polar solvent is selected from propylene glycol, dipropylene glycol, dipropylene mono-methyl glycol ether and mixtures thereof.

As used herein, the term "Hansen Solubility Parameters" (HSP) refers to system of describing solute solubility in a solvent based on the non-polar parameter, polar parameter, hydrogen bonding parameter, and total solubility parameter as disclosed in "Hansen Solubility Parameters" by Charles M. Hansen, ISBN 0-8493-7248-8. For definition of Hh = Hydrogen Bonding Solubility Parameter, see page 17 of the above book. For definition of Hp = Polar Solubility Parameter see page 16-17 of the above book.

Other suitable solvents may include saturated and unsaturated C6-C14 dimethylamines (e.g. Genagen^{®} 4166, Hallcomid^{®} M8-10, Hallcomid^{®} M-10, Hallcomid^{®} 1025, Hallcomid^{®} M12-14, Agnique^{®} AMD810, Agnique^{®} AMD10, Agnique^{®} AMD12).

Crops of useful plants to which the compositions according to the invention may be applied include:
perennial and annual crops, such as berry plants for example blackberries, blueberries, cranberries, raspberries and strawberries;
cereals, for example, barley, maize (corn), millet, oats, rice, rye, sorghum triticale and wheat;
fibre plants, for example, cotton, flax, hemp, jute and sisal;
field crops, for example, sugar and fodder beet, coffee, hops, mustard, oilseed rape (canola), poppy, sugar cane, sunflower, tea and tobacco;
fruit trees, for example, apple, apricot, avocado, banana, cherry, citrus, nectarine, peach, pear and plum;
grasses, for example, Bermuda grass, bluegrass, bent grass, centipede grass, fescue, ryegrass, St. Augustine grass and Zoysia grass;
herbs, such as basil, borage, chives, coriander, lavender, lovage, mint, oregano, parsley, rosemary, sage and thyme;
legumes, for example, beans, lentils, peas and soya beans;
nuts, for example, almond, cashew, ground nut, hazelnut, peanut, pecan, pistachio and walnut;
palms, for example, oil palm;
ornamentals, for example, flowers, shrubs and trees;
other trees, for example, cacao, coconut, olive and rubber;
vegetables, for example; asparagus, aubergine, broccoli, cabbage, carrot, cucumber, garlic, lettuce, marrow, melon, watermelon, okra, onion, leek, pepper, potato, pumpkin, squash, rhubarb, spinach and tomato; and
vines for example grapes.

In preferred embodiments, in the method of the present invention, the phytopathogen may be selected from *Mycosphaerella graminicola* (*Septoria tritici*) the causal agent of wheat leaf blotch, *Puccinia recondita* or *Puccinia striiformis,* and the plant is cereals, in particular, wheat.

The rate at which the compositions of the invention are applied will depend upon the particular type of phytopathogen, etc, to be controlled, the degree of control required and the timing and method of application which can be readily determined by the person skilled in the art. In general, the compositions of the invention can be applied at an application rate of between 0.005 kilograms/hectare (kg/ha) and about 5.0 kg/ha, based on the total amount of active ingredient in the composition. An application rate of between about 0.1 kg/ha and about 1.5 kg/ha is preferred, with an application rate of between about 0.1 kg/ha and 0.5 kg/ha being especially preferred.

In an aqueous composition comprising the fungicidal composition according to the invention (eg, a tank-mix composition), the one or more additional fungicidal active ingredients may be added separately prior to crop application.

The composition according to the invention may comprise one or more additional fungicidal active ingredients selected from, but not limited to, a sterol demethylation-inhibitor (DMI), quinone-outside-inhibitor (Qol) and a succinate dehydrogenase inhibitor (SDHI).

In particular, the composition may comprise as additional active ingredient(s), one or more of benzovindiflupyr, isopyrazam, pydiflumetofen, azoxystrobin, difenoconazole, prothioconazole, chlorothalonil, fenpropidin, acibenzolar-S-methyl, cyproconazole, cyprodinil, fenpropimorph, propiconazole, hexaconazole, penconazole, pyrifenox, fludioxonil, pyroquilon, tricyclazole, fluazinam, mandipropamid, metalaxyl, metalaxyl-M, oxadixyl, oxathiapiprolin, paclobutrazol, sulfur, thiabendazole, *Aspergillus Flavus* NRRL 21882 (Afla-Guard^{®}) or *Bacillus subtilis var. amyloliquefaciens* Strain FZB24 (Taegro^{®}), folpet, bixafen, boscalid, bromuconazole, cyflufenamid, epoxiconazole, fluindapyr, fluopyram, fluoxytioconazole, fluquinconazole, fluxapyroxad, inpyrfluxam, ipconazole, isoflucypyram, kresoxim-methyl, mancozeb, mefentrifluconazole, metconazole, metrafenone, metyltetraprole, penthiopyrad, picoxystrobin, prochloraz, proquinazid, pyraclostrobin, spiroxamine, tebuconazole, tetraconazole, trifloxystrobin, triticonazole, fluoxapiprolin, ipfentrifluconazole, sedaxane, cyclobutrifluram, flufenoxadiazam, quinofumelin, isotianil, mandestrobin, fenpyrazamine, ipflufenoquin, tebufloquin, tolprocarb, dichlobentiazox, methyl 2-[2-chloro-4-(4-chlorophenoxy)phenyl]-2-hydroxy-3-(1,2,4-triazol-1-yl)propanoate (known from WO 2019/093522), eg, at a weight ratio of 1:1 to florylpicoxamid.

More preferably, the composition according to the invention comprises one or more additional fungicidal active ingredients selected from benzovindiflupyr and pydiflumetofen, wherein the additional fungicidal active ingredient is present in a weight ratio relative to florylpicoxamid of 10:1 to 1:10, and preferably, a weight ratio of 5:1 to 1:5.

The fungicidal composition according to the invention (eg, as a ready-mix concentrate for a tank-mix composition for spraying) may comprise a further pesticidal active ingredient component, eg, at a weight ratio of 1:1 to florylpicoxamid, selected from one of:
a compound selected from the group of substances consisting of petroleum oils, 1,1-bis(4-chlorophenyl)-2-ethoxyethanol, 2,4-dichlorophenyl benzenesulfonate, 2-fluoro-N-methyl-N-1-naphthylacetamide, 4-chlorophenyl phenyl sulfone, acetoprole, aldoxycarb, amidithion, amidothioate, amiton, amiton hydrogen oxalate, amitraz, aramite, arsenous oxide, azobenzene, azothoate, benomyl, benoxafos, benzyl benzoate, bixafen, brofenvalerate, bromocyclen, bromophos, bromopropylate, buprofezin, butocarboxim, butoxycarboxim, butylpyridaben, calcium polysulfide, camphechlor, carbanolate, carbophenothion, cymiazole, chinomethionat, chlorbenside, chlordimeform, chlordimeform hydrochloride, chlorfenethol, chlorfenson, chlorfensulfide, chlorobenzilate, chloromebuform, chloromethiuron, chloropropylate, chlorthiophos, cinerin I, cinerin II, cinerins, closantel, coumaphos, crotamiton, crotoxyphos, cufraneb, cyanthoate, DCPM, DDT, demephion, demephion-O, demephion-S, demeton-methyl, demeton-O, demeton-O-methyl, demeton-S, demeton-S-methyl, demeton-S-methylsulfon, dichlofluanid, dichlorvos, dicliphos, dienochlor, dimefox, dinex, dinex-diclexine, dinocap-4, dinocap-6, dinocton, dinopenton, dinosulfon, dinoterbon, dioxathion, diphenyl sulfone, disulfiram, DNOC, dofenapyn, doramectin, endothion, eprinomectin, ethoate-methyl, etrimfos, fenazaflor, fenbutatin oxide, fenothiocarb, fenpyrad, fenpyroximate, fenpyrazamine, fenson, fentrifanil, flubenzimine, flucycloxuron, fluenetil, fluorbenside, FMC 1137, formetanate, formetanate hydrochloride, formparanate, gamma-HCH, glyodin, halfenprox, hexadecyl cyclopropanecarboxylate, isocarbophos, jasmolin I, jasmolin II, jodfenphos, lindane, malonoben, mecarbam, mephosfolan, mesulfen, methacrifos, methyl bromide, metolcarb, mexacarbate, milbemycin oxime, mipafox, monocrotophos, morphothion, moxidectin, naled, 4-chloro-2-(2-chloro-2-methyl-propyl)-5-[(6-iodo-3-pyridyl)methoxy]pyridazin-3-one, nifluridide, nikkomycins, nitrilacarb, nitrilacarb 1:1 zinc chloride complex, omethoate, oxydeprofos, oxydisulfoton, pp'-DDT, parathion, permethrin, phenkapton, phosalone, phosfolan, phosphamidon, polychloroterpenes, polynactins, proclonol, promacyl, propoxur, prothidathion, prothoate, pyrethrin I, pyrethrin II, pyrethrins, pyridaphenthion, pyrimitate, quinalphos, quintiofos, R-1492, phosglycin, rotenone, schradan, sebufos, selamectin, sophamide, SSI-121, sulfiram, sulfluramid, sulfotep, sulfur, diflovidazin, tau-fluvalinate, TEPP, terbam, tetradifon, tetrasul, thiafenox, thiocarboxime, thiofanox, thiometon, thioquinox, thuringiensin, triamiphos, triarathene, triazophos, triazuron, trifenofos, trinactin, vamidothion, vaniliprole, bethoxazin, copper dioctanoate, copper sulfate, cybutryne, dichlone, dichlorophen, endothal, fentin, hydrated lime, nabam, quinoclamine, quinonamid, simazine, triphenyltin acetate, triphenyltin hydroxide, crufomate, piperazine, thiophanate, chloralose, fenthion, pyridin-4-amine, strychnine, 1-hydroxy-1H-pyridine-2-thione, 4-(quinoxalin-2-ylamino)benzenesulfonamide, 8-hydroxyquinoline sulfate, bronopol, copper hydroxide, cresol, dipyrithione, dodicin, fenaminosulf, formaldehyde, hydrargaphen, kasugamycin, kasugamycin hydrochloride hydrate, nickel bis(dimethyldithiocarbamate), nitrapyrin, octhilinone, oxolinic acid, oxytetracycline, potassium hydroxyquinoline sulfate, probenazole, streptomycin, streptomycin sesquisulfate, tecloftalam, thiomersal, Adoxophyes orana GV, Agrobacterium radiobacter, Amblyseius spp., Anagrapha falcifera NPV, Anagrus atomus, Aphelinus abdominalis, Aphidius colemani, Aphidoletes aphidimyza, Autographa californica NPV, Bacillus sphaericus Neide, Beauveria brongniartii, Chrysoperla carnea, Cryptolaemus montrouzieri, Cydia pomonella GV, Dacnusa sibirica, Diglyphus isaea, Encarsia formosa, Eretmocerus eremicus, Heterorhabditis bacteriophora and H. megidis, Hippodamia convergens, Leptomastix dactylopii, Macrolophus caliginosus, Mamestra brassicae NPV, Metaphycus helvolus, Metarhizium anisopliae var. acridum, Metarhizium anisopliae var. anisopliae, Neodiprion sertifer NPV and N. lecontei NPV, Orius spp., Paecilomyces fumosoroseus, Phytoseiulus persimilis, Steinernema bibionis, Steinernema carpocapsae, Steinernema feltiae, Steinernema glaseri, Steinernema riobrave, Steinernema riobravis, Steinernema scapterisci, Steinernema spp., Trichogramma spp., Typhlodromus occidentalis, Verticillium lecanii, apholate, bisazir, busulfan, dimatif, hemel, hempa, metepa, methiotepa, methyl apholate, morzid, penfluron, tepa, thiohempa, thiotepa, tretamine, uredepa, (E)-dec-5-en-1-yl acetate with (E)-dec-5-en-1-ol, (E)-tridec-4-en-1-yl acetate, (E)-6-methylhept-2-en-4-ol, (E,Z)-tetradeca-4,10-dien-1-yl acetate, (Z)-dodec-7-en-1-yl acetate, (Z)-hexadec-11-enal, (Z)-hexadec-11-en-1-yl acetate, (Z)-hexadec-13-en-11-yn-1-yl acetate, (Z)-icos-13-en-10-one, (Z)-tetradec-7-en-1-al, (Z)-tetradec-9-en-1-ol, (Z)-tetradec-9-en-1-yl acetate, (7E,9Z)-dodeca-7,9-dien-1-yl acetate, (9Z,11E)-tetradeca-9,11-dien-1-yl acetate, (9Z,12E)-tetradeca-9,12-dien-1-yl acetate, 14-methyloctadec-1-ene, 4-methylnonan-5-ol with 4-methylnonan-5-one, alpha-multistriatin, brevicomin, codlelure, codlemone, cuelure, disparlure, dodec-8-en-1-yl acetate, dodec-9-en-1-yl acetate, dodeca-8, 10-dien-1-yl acetate, dominicalure, ethyl 4-methyloctanoate, eugenol, frontalin, grandlure, grandlure I, grandlure II, grandlure III, grandlure IV, hexalure, ipsdienol, ipsenol, japonilure, lineatin, litlure, looplure, medlure, megatomoic acid, methyl eugenol, muscalure, octadeca-2,13-dien-1-yl acetate, octadeca-3,13-dien-1-yl acetate, orfralure, oryctalure, ostramone, siglure, sordidin, sulcatol, tetradec-11-en-1-yl acetate, trimedlure, trimedlure A, trimedlure B₁, trimedlure B₂, trimedlure C, trunc-call, 2-(octylthio)-ethanol, butopyronoxyl, butoxy(polypropylene glycol), dibutyl adipate, dibutyl phthalate, dibutyl succinate, diethyltoluamide, dimethyl carbate, dimethyl phthalate, ethyl hexanediol, hexamide, methoquin-butyl, methylneodecanamide, oxamate, picaridin, 1-dichloro-1-nitroethane, 1,1-dichloro-2,2-bis(4-ethylphenyl)ethane, 1,2-dichloropropane with 1,3-dichloropropene, 1-bromo-2-chloroethane, 2,2,2-trichloro-1-(3,4-dichlorophenyl)ethyl acetate, 2,2-dichlorovinyl 2-ethylsulfinylethyl methyl phosphate, 2-(1,3-dithiolan-2-yl)phenyl dimethylcarbamate, 2-(2-butoxyethoxy)ethyl thiocyanate, 2-(4,5-dimethyl-1,3-dioxolan-2-yl)phenyl methylcarbamate, 2-(4-chloro-3,5-xylyloxy)ethanol, 2-chlorovinyl diethyl phosphate, 2-imidazolidone, 2-isovalerylindan-1,3-dione, 2-methyl(prop-2-ynyl)aminophenyl methylcarbamate, 2-thiocyanatoethyl laurate, 3-bromo-1-chloroprop-1-ene, 3-methyl-1-phenylpyrazol-5-yl dimethylcarbamate, 4-methyl(prop-2-ynyl)amino-3,5-xylyl methylcarbamate, 5,5-dimethyl-3-oxocyclohex-1-enyl dimethylcarbamate, acethion, acrylonitrile, aldrin, allosamidin, allyxycarb, alpha-ecdysone, aluminium phosphide, aminocarb, anabasine, athidathion, azamethiphos, Bacillus thuringiensis delta endotoxins, barium hexafluorosilicate, barium polysulfide, barthrin, Bayer 22/190, Bayer 22408, beta-cyfluthrin, beta-cypermethrin, bioethanomethrin, biopermethrin, bis(2-chloroethyl) ether, borax, bromfenvinfos, bromo-DDT, bufencarb, butacarb, butathiofos, butonate, calcium arsenate, calcium cyanide, carbon disulfide, carbon tetrachloride, cartap hydrochloride, cevadine, chlorbicyclen, chlordane, chlordecone, chloroform, chloropicrin, chlorphoxim, chlorprazophos, cis-resmethrin, cismethrin, clocythrin, copper acetoarsenite, copper arsenate, copper oleate, coumithoate, cryolite, CS 708, cyanofenphos, cyanophos, cyclethrin, cythioate, d-tetramethrin, DAEP, dazomet, decarbofuran, diamidafos, dicapthon, dichlofenthion, dicresyl, dicyclanil, dieldrin, diethyl 5-methylpyrazol-3-yl phosphate, dilor, dimefluthrin, dimetan, dimethrin, dimethylvinphos, dimetilan, dinoprop, dinosam, dinoseb, diofenolan, dioxabenzofos, dithicrofos, DSP, ecdysterone, EI 1642, EMPC, EPBP, etaphos, ethiofencarb, ethyl formate, ethylene dibromide, ethylene dichloride, ethylene oxide, EXD, fenchlorphos, fenethacarb, fenitrothion, fenoxacrim, fenpirithrin, fensulfothion, fenthion-ethyl, flucofuron, fosmethilan, fospirate, fosthietan, furathiocarb, furethrin, guazatine, guazatine acetates, sodium tetrathiocarbonate, halfenprox, HCH, HEOD, heptachlor, heterophos, HHDN, hydrogen cyanide, hyquincarb, IPSP, isazofos, isobenzan, isodrin, isofenphos, isolane, isoprothiolane, isoxathion, juvenile hormone I, juvenile hormone II, juvenile hormone III, kelevan, kinoprene, lead arsenate, leptophos, lirimfos, lythidathion, m-cumenyl methylcarbamate, magnesium phosphide, mazidox, mecarphon, menazon, mercurous chloride, mesulfenfos, metam, metam-potassium, metam-sodium, methanesulfonyl fluoride, methocrotophos, methoprene, methothrin, methoxychlor, methyl isothiocyanate, methylchloroform, methylene chloride, metoxadiazone, mirex, naftalofos, naphthalene, NC-170, nicotine, nicotine sulfate, nithiazine, nornicotine, O-5-dichloro-4-iodophenyl O-ethyl ethylphosphonothioate, O,O-diethyl O-4-methyl-2-oxo-2H-chromen-7-yl phosphorothioate, O,O-diethyl O-6-methyl-2-propylpyrimidin-4-yl phosphorothioate, O,O,O',O'-tetrapropyl dithiopyrophosphate, oleic acid, para-dichlorobenzene, parathion-methyl, pentachlorophenol, pentachlorophenyl laurate, PH 60-38, phenkapton, phosnichlor, phosphine, phoxim-methyl, pirimetaphos, polychlorodicyclopentadiene isomers, potassium arsenite, potassium thiocyanate, precocene I, precocene II, precocene III, primidophos, profluthrin, promecarb, prothiofos, pyrazophos, pyresmethrin, quassia, quinalphos-methyl, quinothion, rafoxanide, resmethrin, rotenone, kadethrin, ryania, ryanodine, sabadilla, schradan, sebufos, SI-0009, thiapronil, sodium arsenite, sodium cyanide, sodium fluoride, sodium hexafluorosilicate, sodium pentachlorophenoxide, sodium selenate, sodium thiocyanate, sulcofuron, sulcofuron-sodium, sulfuryl fluoride, sulprofos, tar oils, tazimcarb, TDE, tebupirimfos, temephos, terallethrin, tetrachloroethane, thicrofos, thiocyclam, thiocyclam hydrogen oxalate, thionazin, thiosultap, thiosultap-sodium, tralomethrin, transpermethrin, triazamate, trichlormetaphos-3, trichloronat, trimethacarb, tolprocarb, triclopyricarb, triprene, veratridine, veratrine, XMC, zetamethrin, zinc phosphide, zolaprofos, meperfluthrin, tetramethylfluthrin, bis(tributyltin) oxide, bromoacetamide, ferric phosphate, niclosamide-olamine, tributyltin oxide, pyrimorph, trifenmorph, 1,2-dibromo-3-chloropropane, 1,3-dichloropropene, 3,4-dichlorotetrahydrothiophene 1,1-dioxide, 3-(4-chlorophenyl)-5-methylrhodanine, 5-methyl-6-thioxo-1,3,5-thiadiazinan-3-ylacetic acid, 6-isopentenylaminopurine, anisiflupurin, benclothiaz, cytokinins, DCIP, furfural, isamidofos, kinetin, Myrothecium verrucaria composition, tetrachlorothiophene, xylenols, zeatin, potassium ethylxanthate, acibenzolar, acibenzolar-S-methyl, Reynoutria sachalinensis extract, alpha-chlorohydrin, antu, barium carbonate, bisthiosemi, brodifacoum, bromadiolone, bromethalin, chlorophacinone, cholecalciferol, coumachlor, coumafuryl, coumatetralyl, crimidine, difenacoum, difethialone, diphacinone, ergocalciferol, flocoumafen, fluoroacetamide, flupropadine, flupropadine hydrochloride, norbormide, phosacetim, phosphorus, pindone, pyrinuron, scilliroside, sodium fluoroacetate, thallium sulfate, warfarin, 2-(2-butoxyethoxy)-ethyl piperonylate, 5-(1,3-benzodioxol-5-yl)-3-hexylcyclohex-2-enone, farnesol with nerolidol, verbutin, MGK 264, piperonyl butoxide, piprotal, propyl isomer, S421, sesamex, sesasmolin, sulfoxide, anthraquinone, copper naphthenate, copper oxychloride, dicyclopentadiene, thiram, zinc naphthenate, ziram, imanin, ribavirin, chloroinconazide, mercuric oxide, thiophanate-methyl, azaconazole, bitertanol, bromuconazole, cyproconazole, difenoconazole, diniconazole, epoxiconazole, fenbuconazole, fluquinconazole, flusilazole, flutriafol, furametpyr, hexaconazole, imazalil, imibenconazole, ipconazole, metconazole, myclobutanil, paclobutrazole, pefurazoate, penconazole, prothioconazole, pyrifenox, prochloraz, propiconazole, pyrisoxazole, simeconazole, tebuconazole, tetraconazole, triadimefon, triadimenol, triflumizole, triticonazole, ancymidol, fenarimol, nuarimol, bupirimate, dimethirimol, ethirimol, dodemorph, fenpropidin, fenpropimorph, spiroxamine, tridemorph, cyprodinil, mepanipyrim, pyrimethanil, fenpiclonil, fludioxonil, benalaxyl, furalaxyl, metalaxyl, R-metalaxyl, ofurace, oxadixyl, carbendazim, debacarb, fuberidazole, thiabendazole, chlozolinate, dichlozoline, myclozoline, procymi-done, vinclozoline, boscalid, carboxin, fenfuram, flutolanil, mepronil, oxycarboxin, penthiopyrad, thifluzamide, dodine, iminoctadine, azoxystrobin, dimoxystrobin, enestroburin, fenaminstrobin, flufenoxystrobin, fluoxastrobin, kresoxim-methyl, metominostrobin, trifloxystrobin, orysastrobin, picoxystrobin, pyraclostrobin, pyrametostrobin, pyraoxystrobin, ferbam, mancozeb, maneb, metiram, propineb, zineb, captafol, captan, fluoroimide, folpet, tolylfluanid, bordeaux mixture, copper oxide, mancopper, oxine-copper, nitrothal-isopropyl, edifenphos, iprobenphos, phosdiphen, tolclofos-methyl, anilazine, benthiavalicarb, blasticidin-S, chloroneb, chlorothalonil, cyflufenamid, cymoxanil, cyclobutrifluram, diclocymet, diclomezine, dicloran, diethofencarb, dimethomorph, flumorph, dithianon, ethaboxam, etridiazole, famoxadone, fenamidone, fenoxanil, ferimzone, fluazinam, flumetylsulforim, fluopicolide, fluoxytioconazole, flusulfamide, fluxapyroxad, fenhexamid, fosetyl-aluminium, hymexazol, iprovalicarb, cyazofamid, methasulfocarb, metrafenone, pencycuron, phthalide, polyoxins, propamocarb, pyribencarb, proquinazid, pyroquilon, pyriofenone, quinoxyfen, quintozene, tiadinil, triazoxide, tricyclazole, triforine, validamycin, valifenalate, zoxamide, mandipropamid, flubeneteram, isopyrazam, sedaxane, benzovindiflupyr, pydiflumetofen, 3-difluoromethyl-1-methyl-1H-pyrazole-4-carboxylic acid (3',4',5'-trifluoro-biphenyl-2-yl)-amide, isoflucypram, isotianil, dipymetitrone, 6-ethyl-5,7-dioxo-pyrrolo[4,5][1,4]dithiino[1,2-c]isothiazole-3-carbonitrile, 2-(difluoromethyl)-N-[3-ethyl-1,1-dimethyl-indan-4-yl]pyridine-3-carboxamide, 4-(2,6-difluorophenyl)-6-methyl-5-phenyl-pyridazine-3-carbonitrile, (R)-3-(difluoromethyl)-1-methyl-N-[1,1,3-trimethylindan-4-yl]pyrazole-4-carboxamide, 4-(2-bromo-4-fluorophenyl)-N-(2-chloro-6-fluoro-phenyl)-2,5-dimethyl-pyrazol-3-amine, 4- (2- bromo- 4- fluorophenyl) - N-(2- chloro- 6- fluorophenyl) - 1, 3- dimethyl- 1H- pyrazol- 5-amine, fluindapyr, coumethoxystrobin (jiaxiangjunzhi), lvbenmixianan, dichlobentiazox, mandestrobin, 3-(4,4-difluoro-3,4-dihydro-3,3-dimethylisoquinolin-1-yl)quinolone, 2-[2-fluoro-6-[(8-fluoro-2-methyl-3-quinolyl)oxy]phenyl]propan-2-ol, oxathiapiprolin, tert-butyl N-[6-[[[(1-methyltetrazol-5-yl)-phenylmethylene]amino]oxymethyl]-2-pyridyl]carbamate, pyraziflumid, inpyrfluxam, trolprocarb, mefentrifluconazole, ipfentrifluconazole, 2-(difluoromethyl)-N-[(3R)-3-ethyl-1,1-dimethyl-indan-4-yl]pyridine-3-carboxamide, N'-(2,5-dimethyl-4-phenoxy-phenyl)-N-ethyl-N-methyl-formamidine, N'-[4-(4,5-dichlorothiazol-2-yl)oxy-2,5-dimethylphenyl]-N-ethyl-N-methyl-formamidine, [2-[3-[2-[1-[2-[3,5-bis(difluoromethyl)pyrazol-1-yl]acetyl]-4-piperidyl]thiazol-4-yl]-4,5-dihydroisoxazol-5-yl]-3-chloro-phenyl] methanesulfonate, but-3-ynyl N-[6-[[(Z)-[(1-methyltetrazol-5-yl)-phenyl-methylene]amino]oxymethyl]-2-pyridyl]carbamate, methyl N-[[5-[4-(2,4-dimethylphenyl)triazol-2-yl]-2-methyl-phenyl]methyl]carbamate, 3-chloro-6-methyl-5-phenyl-4-(2,4,6-trifluorophenyl)pyridazine, pyridachlometyl, 3-(difluoromethyl)-1-methyl-N-[1,1,3-trimethylindan-4-yl]pyrazole-4-carboxamide, 1-[2-[[1-(4-chlorophenyl)pyrazol-3-yl]oxymethyl]-3-methyl-phenyl]-4-methyl-tetrazol-5-one, 1-methyl-4-[3-methyl-2-[[2-methyl-4-(3,4,5-trimethylpyrazol-1-yl)phenoxy]methyl]phenyl]tetrazol-5-one, aminopyrifen, ametoctradin, amisulbrom, penflufen, (Z,2E)-5-[1-(4-chlorophenyl)pyrazol-3-yl]oxy-2-methoxyimino-N,3-dimethyl-pent-3-enamide, fenpicoxamid, tebufloquin, ipflufenoquin, quinofumelin, isofetamid, N-[2-[2,4-dichloro-phenoxy]phenyl]-3-(difluoromethyl)-1-methyl-pyrazole-4-carboxamide, N-[2-[2-chloro-4-(trifluoromethyl)phenoxy]phenyl]-3-(difluoromethyl)-1-methyl-pyrazole-4-carboxamide, benzothiostrobin, phenamacril, 5-amino-1,3,4-thiadiazole-2-thiol zinc salt (2:1), fluopyram, flufenoxadiazam, flutianil, fluopimomide, pyrapropoyne, picarbutrazox, 2-(difluoromethyl)-N-(3-ethyl-1,1-dimethyl-indan-4-yl)pyridine-3-carboxamide, 2- (difluoromethyl) - N-((3R) - 1, 1, 3- trimethylindan- 4- yl) pyridine- 3- carboxamide, 4-[[6-[2-(2,4-difluorophenyl)-1,1-difluoro-2-hydroxy-3-(1,2,4-triazol-1-yl)propyl]-3-pyridyl]oxy]benzonitrile, metyltetraprole, 2- (difluoromethyl) - N-((3R) - 1, 1, 3-trimethylindan- 4- yl) pyridine- 3- carboxamide, α- (1, 1-dimethylethyl) - α- [4'-(trifluoromethoxy) [1, 1'- biphenyl] - 4- yl] -5- pyrimidinemethanol, fluoxapiprolin, enoxastrobin, 4-[[6-[2-(2,4-difluorophenyl)-1,1-difluoro-2-hydroxy-3-(1,2,4-triazol-1-yl)propyl]-3-pyridyl]oxy] benzonitrile, 4-[[6-[2-(2,4-difluorophenyl)-1,1-difluoro-2-hydroxy-3-(5-sulfanyl-1,2,4-triazol-1-yl)propyl]-3-pyridyl]oxy] benzonitrile, 4-[[6-[2-(2,4-difluorophenyl)-1,1-difluoro-2-hydroxy-3-(5-thioxo-4H-1,2,4-triazol-1-yl)propyl]-3-pyridyl]oxy]benzonitrile, trinexapac, coumoxystrobin, zhongshengmycin, thiodiazole copper, zinc thiazole, amectotractin, iprodione, seboctylamine, N'-[5-bromo-2-methyl-6-[(1S)-1-methyl-2-propoxy-ethoxy]-3-pyridyl]-N-ethyl-N-methyl-formamidine, N'-[5-bromo-2-methyl-6-[(1R)-1-methyl-2-propoxy-ethoxy]-3-pyridyl]-N-ethyl-N-methyl-formamidine, N'-[5-bromo-2-methyl-6-(1-methyl-2-propoxy-ethoxy)-3-pyridyl]-N-ethyl-N-methyl-formamidine, N'-[5-chloro-2-methyl-6-(1-methyl-2-propoxy-ethoxy)-3-pyridyl]-N-ethyl-N-methyl-formamidine, N'-[5-bromo-2-methyl-6-(1-methyl-2-propoxy-ethoxy)-3-pyridyl]-N-isopropyl-N-methyl-formamidine (these compounds may be prepared from the methods described in WO2015/155075); N'-[5-bromo-2-methyl-6-(2-propoxypropoxy)-3-pyridyl]-N-ethyl-N-methyl-formamidine (this compound may be prepared from the methods described in IPCOM000249876D); N-isopropyl-N'-[5-methoxy-2-methyl-4-(2,2,2-trifluoro-1-hydroxy-1-phenyl-ethyl)phenyl]-N-methyl-formamidine, N'-[4-(1-cyclopropyl-2,2,2-trifluoro-1-hydroxy-ethyl)-5-methoxy-2-methyl-phenyl]-N-isopropyl-N-methyl-formamidine (these compounds may be prepared from the methods described in WO2018/228896); N-ethyl-N'-[5-methoxy-2-methyl-4-[(2-trifluoromethyl)oxetan-2-yl]phenyl]-N-methyl-formamidine, N-ethyl-N'-[5-methoxy-2-methyl-4-[(2-trifuoromethyl)tetrahydrofuran-2-yl]phenyl]-N-methyl-formamidine (these compounds may be prepared from the methods described in WO2019/110427); N-[(1R)-1-benzyl-3-chloro-1-methyl-but-3-enyl]-8-fluoro-quinoline-3-carboxamide, N-[(1S)-1-benzyl-3-chloro-1-methyl-but-3-enyl]-8-fluoro-quinoline-3-carboxamide, N-[(1R)-1-benzyl-3,3,3-trifluoro-1-methyl-propyl]-8-fluoro-quinoline-3-carboxamide, N-[(1S)-1-benzyl-3,3,3-trifluoro-1-methyl-propyl]-8-fluoro-quinoline-3-carboxamide, N-[(1R)-1-benzyl-1,3-dimethyl-butyl]-7,8-difluoro-quinoline-3-carboxamide, N-[(1S)-1-benzyl-1,3-dimethyl-butyl]-7,8-difluoro-quinoline-3-carboxamide, 8-fluoro-N-[(1R)-1-[(3-fluorophenyl)methyl]-1,3-dimethyl-butyl]quinoline-3-carboxamide, 8-fluoro-N-[(1S)-1-[(3-fluorophenyl)methyl]-1,3-dimethyl-butyl]quinoline-3-carboxamide, N-[(1R)-1-benzyl-1,3-dimethyl-butyl]-8-fluoro-quinoline-3-carboxamide, N-[(1S)-1-benzyl-1,3-dimethyl-butyl]-8-fluoro-quinoline-3-carboxamide, N-((1R)-1-benzyl-3-chloro-1-methyl-but-3-enyl)-8-fluoro-quinoline-3-carboxamide, N-((1S)-1-benzyl-3-chloro-1-methyl-but-3-enyl)-8-fluoro-quinoline-3-carboxamide (these compounds may be prepared from the methods described in WO2017/153380); 1-(6,7-dimethylpyrazolo[1,5-a]pyridin-3-yl)-4,4,5-trifluoro-3,3-dimethyl-isoquinoline, 1-(6,7-dimethylpyrazolo[1,5-a]pyridin-3-yl)-4,4,6-trifluoro-3,3-dimethyl-isoquinoline, 4,4-difluoro-3,3-dimethyl-1-(6-methylpyrazolo[1,5-a]pyridin-3-yl)isoquinoline, 4,4-difluoro-3,3-dimethyl-1-(7-methylpyrazolo[1,5-a]pyridin-3-yl)isoquinoline, 1-(6-chloro-7-methyl-pyrazolo[1,5-a]pyridin-3-yl)-4,4-difluoro-3,3-dimethyl-isoquinoline (these compounds may be prepared from the methods described in WO2017/025510); 1-(4,5-dimethylbenzimidazol-1-yl)-4,4,5-trifluoro-3,3-dimethyl-isoquinoline, 1-(4,5-dimethylbenzimidazol-1-yl)-4,4-difluoro-3,3-dimethyl-isoquinoline, 6-chloro-4,4-difluoro-3,3-dimethyl-1-(4-methylbenzimidazol-1-yl)isoquinoline, 4,4-difluoro-1-(5-fluoro-4-methyl-benzimidazol-1-yl)-3,3-dimethyl-isoquinoline, 3-(4,4-difluoro-3,3-dimethyl-1-isoquinolyl)-7,8-dihydro-6H-cyclopenta[e]benzimidazole (these compounds may be prepared from the methods described in WO2016/156085); N-methoxy-N-[[4-[5-(trifluoromethyl)-1,2,4-oxadiazol-3-yl]phenyl]methyl]cyclopropanecarboxamide, N,2-dimethoxy-N-[[4-[5-(trifluoromethyl)-1,2,4-oxadiazol-3-yl]phenyl]methyl]propanamide, N-ethyl-2-methyl-N-[[4-[5-(trifluoromethyl)-1,2,4-oxadiazol-3-yl]phenyl]methyl]propanamide, 1-methoxy-3-methyl-1-[[4-[5-(trifluoromethyl)-1,2,4-oxadiazol-3-yl]phenyl]methyl]urea, 1,3-dimethoxy-1-[[4-[5-(trifluoromethyl)-1,2,4-oxadiazol-3-yl]phenyl]methyl]urea, 3-ethyl-1-methoxy-1-[[4-[5-(trifluoromethyl)-1,2,4-oxadiazol-3-yl]phenyl]methyl]urea, N-[[4-[5-(trifluoromethyl)-1,2,4-oxadiazol-3-yl]phenyl]methyl]propanamide, 4,4-dimethyl-2-[[4-[5-(trifluoromethyl)-1,2,4-oxadiazol-3-yl]phenyl]methyl]isoxazolidin-3-one, 5,5-dimethyl-2-[[4-[5-(trifluoromethyl)-1,2,4-oxadiazol-3-yl]phenyl]methyl]isoxazolidin-3-one, ethyl 1-[[4-[5-(trifluoromethyl)-1,2,4-oxadiazol-3-yl]phenyl]methyl]pyrazole-4-carboxylate, N,N-dimethyl-1-[[4-[5-(trifluoromethyl)-1,2,4-oxadiazol-3-yl]phenyl]methyl]-1,2,4-triazol-3-amine (these compounds may be prepared from the methods described in WO 2017/055473, WO 2017/055469, WO 2017/093348 and WO 2017/118689); 2-[6-(4-chlorophenoxy)-2-(trifluoromethyl)-3-pyridyl]-1-(1,2,4-triazol-1-yl)propan-2-ol (this compound may be prepared from the methods described in WO 2017/029179); 2-[6-(4-bromophenoxy)-2-(trifluoromethyl)-3-pyridyl]-1-(1,2,4-triazol-1-yl)propan-2-ol (this compound may be prepared from the methods described in WO 2017/029179); 3-[2-(1-chlorocyclopropyl)-3-(2-fluorophenyl)-2-hydroxy-propyl]imidazole-4-carbonitrile (this compound may be prepared from the methods described in WO 2016/156290); 3-[2-(1-chlorocyclopropyl)-3-(3-chloro-2-fluoro-phenyl)-2-hydroxy-propyl]imidazole-4-carbonitrile (this compound may be prepared from the methods described in WO 2016/156290); (4-phenoxyphenyl)methyl 2-amino-6-methyl-pyridine-3-carboxylate (this compound may be prepared from the methods described in WO 2014/006945); 2,6-Dimethyl-1H,5H-[1,4]dithiino[2,3-c:5,6-c']dipyrrole-1,3,5,7(2H,6H)-tetrone (this compound may be prepared from the methods described in WO 2011/138281) N-methyl-4-[5-(trifluoromethyl)-1,2,4-oxadiazol-3-yl]benzenecarbothioamide; N-methyl-4-[5-(trifluoromethyl)-1,2,4-oxadiazol-3-yl]benzamide; (Z,2E)-5-[1-(2,4-dichlorophenyl)pyrazol-3-yl]oxy-2-methoxyimino-N,3-dimethyl-pent-3-enamide (this compound may be prepared from the methods described in WO 2018/153707); N'-(2-chloro-5-methyl-4-phenoxy-phenyl)-N-ethyl-N-methyl-formamidine; N'-[2-chloro-4-(2-fluorophenoxy)-5-methyl-phenyl]-N-ethyl-N-methyl-formamidine (this compound may be prepared from the methods described in WO 2016/202742); 2-(difluoromethyl)-N-[(3S)-3-ethyl-1,1-dimethyl-indan-4-yl]pyridine-3-carboxamide (this compound may be prepared from the methods described in WO 2014/095675); (5-methyl-2-pyridyl)-[4-[5-(trifluoromethyl)-1,2,4-oxadiazol-3-yl]phenyl]methanone, (3-methylisoxazol-5-yl)-[4-[5-(trifluoromethyl)-1,2,4-oxadiazol-3-yl]phenyl]methanone (these compounds may be prepared from the methods described in WO 2017/220485); 2-oxo-N-propyl-2-[4-[5-(trifluoromethyl)-1,2,4-oxadiazol-3-yl]phenyl]acetamide (this compound may be prepared from the methods described in WO 2018/065414); ethyl 1-[[5-[5-(trifluoromethyl)-1,2,4-oxadiazol-3-yl]-2-thienyl]methyl]pyrazole-4-carboxylate (this compound may be prepared from the methods described in WO 2018/158365); 2,2-difluoro-N-methyl-2-[4-[5-(trifluoromethyl)-1,2,4-oxadiazol-3-yl]phenyl]acetamide, N-[(E)-methoxyiminomethyl]-4-[5-(trifluoromethyl)-1,2,4-oxadiazol-3-yl]benzamide, N-[(Z)-methoxyiminomethyl]-4-[5-(trifluoromethyl)-1,2,4-oxadiazol-3-yl]benzamide, N-[N-methoxy-C-methyl-carbonimidoyl]-4-[5-(trifluoromethyl)-1,2,4-oxadiazol-3-yl]benzamide (these compounds may be prepared from the methods described in WO 2018/202428).

Compositions of the invention may be prepared in accordance with standard formulation methodologies known to the person skilled in the art.

### EXAMPLES:

The Examples which follow serve to illustrate the invention and in particular to demonstrate how the addition of an organic acid according to the invention to a composition comprising florylpicoxamid affects the chemical stability (ie, eliminates or limits degradation) of the florylpicoxamid active ingredient compared to compositions not containing the organic acid or an organic acid not according to the invention. See Tables 1 to 4 below.

Each composition of the preparation samples 1-1 to 1-11, 2-1 to 2-14, 3-1 to 3-8 and 4-1 to 4-3 was prepared by weighing an emulsifier (if present - refer Tables 1 to 4) into a glass vial, adding solvent (N,N-dimethyldecanamide, Hallcomid^{®} M10 or methyl benzoate), whereby the sample was then mixed on rollers until a homogenous emulsion formed. Acid (if present) was added to the vial and the sample placed back on the rollers for a minimum of 2 hours. Florylpicoxamid (technical grade AI) was then added to the vial and roller mixing continued until fully dissolved. Each sample was then divided into two equal portions and stored at -18°C and 54°C for 14 days before being analysed for remaining florylpicoxamid content via standard HPLC techniques, a relative measure between storage at -18°C and 54°C with 100% indicating an unchanged sample.

Emulsifiers used in these examples include TOXIMUL^{®} 8320 (Stepan Company, USA) which is a polyethylene-polypropylene glycol monobutyl ether (CAS no. 9038-95-3); Plurafac^{®} LF 300 (BASF, USA) which comprises an ethylene oxide-propylene oxide block copolymer monoisotridecyl ether; Marlox^{™} RT 64 (Sasol Chemicals, South Africa) which comprises alcohols, C16-18, ethoxylated propoxylated (>= 2.5 EO/PO, CAS no. 68002-96-0); or Emulsogen^{™} EL360 (Clariant GmbH) which comprises a condensation product of castor oil and ethylene oxide.

The solvent used in these examples are HALLCOMID^{®} M-10 (Stepan Company, USA) which is N,N-dimethyldecanamide, or methyl benzoate (Polynt S.p.A, Italy).

Lactic acid was used as a 90% solution as Purac^{®} PF 90 (Purac Biochem BV, The Netherlands). Other organic acids were used as pure compound.

Florylpicoxamid (structure below) is prepared according to the methods described in WO 2016/122802 and WO 2016/109257.

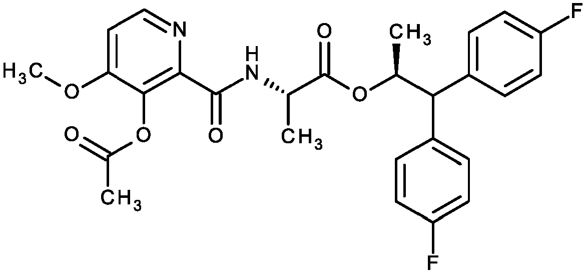

Amounts of florylpicoxamid active ingredient, emulsifier, solvent and organic acid in each of the samples is identified in Tables 1 to 4 on the basis of %w/w in the respective sample.

**Table 1: Florylpicoxamid active ingredient (AI) content after storage (14 days at 54°C, relative to - 18°C) in compositions comprising florylpicoxamid and lactic acid (according to the invention) in the presence of different alkoxylated emulsifiers.**

| | **Sample 1-1** | **Sample 1-2** | **Sample 1-3** | **Sample 1-4** | **Sample 1-5** | **Sample 1-6** | **Sample 1-7** |
|---|---|---|---|---|---|---|---|
| **Florylpicoxamid** | 5.0 | 5.0 | 5.0 | 5.5 | 5.5 | 5 | 5 |
| **Toximul^{®} 8320** | | 5.0 | 5.0 | | | | |
| **Plurafac^{®} LF 300** | | | | 5.5 | 5.5 | | |
| **Marlox^{™} RT 64** | | | | | | 5.0 | 5.0 |
| **Lactic acid (90% solution)** | | | 0.1 | | 0.1 | | 0.1 |
| **Hallcomid^{®}** M**10** | 95.0 | 90.0 | 89.9 | 88.9 | 88.8 | 90.0 | 89.9 |
| **AI content after storage*** | 100% | 60.9% | 94.7 % | 61.6% | 95.7% | 79.8% | 98.1% |

| | | **Sample 1-8** | **Sample 1-9** | **Sample 1-10** | **Sample 1-11** | | |
|---|---|---|---|---|---|---|---|
| **Emulsogen^{™} EL360 (Batch 1)** | 5.0 | 5.0 | | | | | |
| **Emulsogen^{™} EL360 (Batch 2)** | | | | 5.5 | 5.5 | | |
| **Lactic acid (90% solution)** | | 0.1 | | | 0.1 | | |
| **Hallcomid^{®} M10** | 90.0 | 89.9 | | 88.9 | 88.9 | | |
| **AI content after storage** | 99.1% | 99.3% | | 86.8% | 98.9% | | |

From Table 1, it can be seen that for sample 1-1 the solution of florylpicoxamid remains essentially unchanged. For samples, 1-3, 1-5, 1-7, 1-9 and 1-11 according to the invention (lactic acid present) florylpicoxamid is significantly less degraded than samples 1-2, 1-4, 1-6 and 1-10, which are a direct comparison without lactic acid present.

**Table 2: Florylpicoxamid active ingredient (AI) content after storage (14 days at 54°C, relative to - 18°C) in compositions comprising florylpicoxamid and organic acid according to the invention (samples 2-6 to 2-14) and not according to the invention (samples 2-1 to 2-5).**

| | **Sample 2-1** | **Sample 2-2** | **Sample 2-3** | **Sample 2-4** | **Sample 2-5** | **Sample 2-6** | **Sample 2-7** |
|---|---|---|---|---|---|---|---|
| **Florylpicoxamid** | 5.6 | 5.5 | 5.5 | 5.5 | 5.5 | 5.5 | 5.5 |
| **Toximul^{®} 8320** | | 5.5 | 5.5 | 5.5 | 5.5 | 5.5 | 5.5 |
| **Acetic acid** | | | 0.1 | | | | |
| **Butanoic acid** | | | | 0.1 | | | |
| **Octanoic acid** | | | | | 0.1 | | |
| **Oxalic acid** | | | | | | 0.1 | |
| **Malonic acid** | | | | | | | 0.1 |
| **Hallcomid^{®} M10** | 94.4 | 88.9 | 88.8 | 88.8 | 88.8 | 88.8 | 88.8 |
| **AI content after storage*** | 100% | 64.5% | 68.1% | 64.3% | 58.4% | 97.3% | 96.2% |

| | **Sample 2-8** | **Sample 2-9** | **Sample 2-10** | **Sample 2-11** | **Sample 2-12** | **Sample 2-13** | **Sample 2-14** |
|---|---|---|---|---|---|---|---|
| **Florylpicoxamid** | 5.5 | 5.5 | 5.5 | 5.5 | 5.5 | 5.5 | 5.5 |
| **Toximul^{®} 8320** | 5.5 | 5.5 | 5.5 | 5.5 | 5.5 | 5.5 | 5.5 |
| **Adipic acid** | 0.1 | | | | | | |
| **Suberic acid** | | 0.1 | | | | | |
| **Maleic acid** | | | 0.1 | | | | |
| **Glycolic acid** | | | | 0.1 | | | |
| **Lactic acid (90% solution)** | | | | | 0.1 | | |
| **2-hydroxyoctanoic acid** | | | | | | 0.1 | |
| **Citric acid** | | | | | | | 0.1 |
| **Hallcomid^{®} M10** | 88.8 | 88.8 | 88.8 | 88.8 | 88.8 | 88.8 | 88.8 |
| **AI content after storage** | 98.9% | 98.8% | 98.4 % | 97.6 % | 95.2% | 94.4% | 100.0% |

From Table 2, again it can be seen that for sample 2-1 the solution of florylpicoxamid remains essentially unchanged in terms of active ingredient content. For sample 2-2, in the presence of an alkoxylated emulsifier, there is significant degradation of florylpicoxamid. For samples 2-3 to 2-5 with the presence of an organic acid not according to the invention, there is also significant degradation of florylpicoxamid. For samples, 2-6 to 2-14 according to the invention, florylpicoxamid is significantly less degraded (less than about 5% degradation) than samples 2-2 to 2-5, which are a direct comparison without an organic acid present or an organic acid not according to the invention present.

**Table 3: Florylpicoxamid active ingredient (AI) content after storage (14 days at 54°C, relative to - 18°C) in compositions comprising florylpicoxamid and citric acid (according to the invention) present in different amounts.**

| | **Sample 3-1** | **Sample 3-2** | **Sample 3-3** | **Sample 3-4** | **Sample 3-5** | **Sample 3-6** | **Sample 3-7** | **Sample 3-8** |
|---|---|---|---|---|---|---|---|---|
| **Florylpicoxamid** | 5.59 | 5.54 | 5.54 | 5.53 | 5.53 | 5.53 | 5.53 | 5.51 |
| **Toximul^{®} 8320** | | 5.54 | 5.54 | 5.53 | 5.53 | 5.53 | 5.53 | 5.51 |
| **Citric acid** | | | 0.03 | 0.06 | 0.11 | 0.22 | 0.55 | 1.10 |
| **Hallcomid^{®} M10** | 94.41 | 88.92 | 88.88 | 88.88 | 88.83 | 88.72 | 88.39 | 87.88 |
| **AI content after storage** | 100% | 62.0% | 100% | 100% | 99.9% | 99.3% | 97.7% | 96.1% |

From Table 3, again it can be seen that for sample 3-1 the solution of florylpicoxamid remains essentially unchanged. All of samples 3-3 to 3-8 show significantly less or no degradation of florylpicoxamid in comparison with sample 3-2, which does not contain citric acid.

**Table 4: Florylpicoxamid active ingredient (AI) content after storage (14 days at 54°C, relative to - 18°C) in compositions comprising florylpicoxamid and lactic acid (according to the invention) with methyl benzoate as solvent.**

| | **Sample 4-1** | **Sample 4-2** | **Sample 4-3** |
|---|---|---|---|
| **Florylpicoxamid** | 4.6 | 4.6 | 4.6 |
| **Toximul^{®} 8320** | | 4.6 | 4.6 |
| **Lactic acid (90% solution)** | | | 0.1 |
| **Methyl benzoate** | 95.4 | 90.8 | 90.7 |
| **AI content after storage** | 100% | 84.3% | 99.0% |

From Table 4, again it can be seen that for sample 4-1 the solution of florylpicoxamid in methyl benzoate remains essentially unchanged in terms of AI content after storage. However, as shown by sample 4-2, the inclusion of emulsifier results in significant degradation of florylpicoxamid. Sample 4-3 demonstrates with the additional inclusion of lactic acid, degradation of florylpicoxamid is significantly diminished.

The data in Tables 1 to 4 show a clear beneficial effect for the use of an aliphatic C₂ to C₈ hydroxy mono-carboxylic acid or an aliphatic C₂ to C₈ di- or tri-carboxylic acid in the chemical stabilisation of the active ingredient in emulsion compositions comprising florylpicoxamid in a range of different formulation environments.

## Claims

1. A fungicidal composition comprising:
(i) florylpicoxamid as a fungicidal active ingredient; and
(ii) an organic acid selected from an aliphatic C₂ to C₈ hydroxy mono-carboxylic acid or an aliphatic C₂ to C₈ di- or tri-carboxylic acid, or citric acid,
wherein the composition is an emulsifiable concentrate comprising an alkoxylated emulsifier.

2. The composition according to claim 1, wherein florylpicoxamid is present at 1 to 10% by weight of the composition, and preferably at 3 to 6% by weight of the composition.

3. The composition according to claim 1 or claim 2, wherein the organic acid is present at 0.02 to 1.5% by weight of the composition, and preferably at 0.02 to 0.2% by weight of the composition.

4. The composition according to any one of claims 1 to 3, wherein the composition comprises a solvent selected from a C₆ to C₁₂ fatty acid dimethyl amide or an aromatic ester.

5. The composition according to any one of claims 1 to 4, wherein the organic acid is selected from glycolic acid, oxalic acid, malonic acid, adipic acid, maleic acid, lactic acid, suberic acid, 2-hydroxyoctanoic acid or citric acid.

6. The composition according to any one of claims 1 to 5, wherein the organic acid is lactic acid or citric acid.

7. The composition according to any one of claims 1 to 6, wherein the composition comprises one or more additional fungicidal active ingredients selected from:
benzovindiflupyr, isopyrazam, pydiflumetofen, azoxystrobin, difenoconazole, prothioconazole, chlorothalonil, fenpropidin, acibenzolar-S-methyl, cyproconazole, cyprodinil, fenpropimorph, propiconazole, hexaconazole, penconazole, pyrifenox, fludioxonil, pyroquilon, tricyclazole, fluazinam, mandipropamid, metalaxyl, metalaxyl-M, oxadixyl, oxathiapiprolin, paclobutrazol, sulfur, thiabendazole, *Aspergillus Flavus* NRRL 21882 (Afla-Guard^{®}) or *Bacillus subtilis var. amyloliquefaciens* Strain FZB24 (Taegro^{®}), folpet, bixafen, boscalid, bromuconazole, cyflufenamid, epoxiconazole, fluindapyr, fluopyram, fluoxytioconazole, fluquinconazole, fluxapyroxad, inpyrfluxam, ipconazole, isoflucypyram, kresoxim-methyl, mancozeb, mefentrifluconazole, metconazole, metrafenone, metyltetraprole, penthiopyrad, picoxystrobin, prochloraz, proquinazid, pyraclostrobin, spiroxamine, tebuconazole, tetraconazole, trifloxystrobin, triticonazole, fluoxapiprolin, ipfentrifluconazole, sedaxane, cyclobutrifluram, flufenoxadiazam, quinofumelin, isotianil, mandestrobin, fenpyrazamine, ipflufenoquin, tebufloquin, tolprocarb, dichlobentiazox.

8. The composition according to claim 7, wherein the additional fungicidal active ingredient is selected from benzovindiflupyr or pydiflumetofen, and wherein the additional fungicidal active ingredient is present in a weight ratio relative to florylpicoxamid of 10:1 to 1:10, and preferably, a weight ratio of 5:1 to 1:5.

9. The composition according to any one of claims 1 to 8, further comprising one or more additional ingredients selected from: an anti-freeze agent, an anti-foam agent, a thickening agent, a biocide (preservative), a stabilizer, a pigment, a water-miscible solvent, a water-immiscible solvent and one or more non-ionic or ionic emulsifiers.

10. An aqueous composition comprising the composition according to any one of claims 1 to 9, optionally further comprising one or more adjuvants or carriers.

11. A method of controlling or preventing infestation of a crop of a useful plant by phytopathogenic microorganisms, wherein a fungicidally effective amount of a composition according to any one of claims 1 to 10, is applied to the plants, to parts thereof or the locus thereof.

12. The method according to claim 11, wherein the phytopathogenic microorganism is selected from *Mycosphaerella graminicola* (*Septoria tritici*), *Puccinia recondita* or *Puccinia striiformis,* and the plant is cereals, in particular, wheat.

## Patentansprüche

1. Fungizide Zusammensetzung, umfassend
(i) Florylpicoxamid als fungiziden Wirkstoff und
(ii) eine aus einer aliphatischen C₂- bis C₈-Hydroxymonocarbonsäure oder einer aliphatischen C₂- bis C₈-Di- oder Tricarbonsäure oder Citronensäure ausgewählte organische Säure,
wobei es sich bei der Zusammensetzung um ein Emulsionskonzentrat handelt, das einen alkoxylierten Emulgator umfasst.

2. Zusammensetzung nach Anspruch 1, wobei Florylpicoxamid in einer Menge von 1 bis 10 Gew.-% der Zusammensetzung und vorzugsweise 3 bis 6 Gew.-% der Zusammensetzung vorhanden ist.

3. Zusammensetzung nach Anspruch 1 oder Anspruch 2, wobei die organische Säure in einer Menge von 0,02 bis 1,5 Gew.-% der Zusammensetzung und vorzugsweise 0,02 bis 0,2 Gew.-% der Zusammensetzung vorhanden ist.

4. Zusammensetzung nach einem der Ansprüche 1 bis 3, wobei die Zusammensetzung ein aus einem C₆- bis C₁₂-Fettsäuredimethylamid oder einem aromatischen Ester ausgewähltes Lösungsmittel umfasst.

5. Zusammensetzung nach einem der Ansprüche 1 bis 4, wobei die organische Säure aus Glykolsäure, Oxalsäure, Malonsäure, Adipinsäure, Maleinsäure, Milchsäure, Korksäure, 2-Hydroxyoctansäure oderCitronensäure ausgewählt ist.

6. Zusammensetzung nach einem der Ansprüche 1 bis 5, wobei es sich bei der organischen Säure um Milchsäure oder Citronensäure handelt.

7. Zusammensetzung nach einem der Ansprüche 1 bis 6, wobei die Zusammensetzung einen oder mehrere zusätzliche fungizide Wirkstoffe umfasst, ausgewählt aus:
Benzovindiflupyr, Isopyrazam, Pydiflumetofen, Azoxystrobin, Difenoconazol, Prothioconazol, Chlorothalonil, Fenpropidin, Acibenzolar-S-methyl, Cyproconazol, Cyprodinil, Fenpropimorph, Propiconazol, Hexaconazol, Penconazol, Pyrifenox, Fludioxonil, Pyroquilon, Tricyclazol, Fluazinam, Mandipropamid, Metalaxyl, Metalaxyl-M, Oxadixyl, Oxathiapiprolin, Paclobutrazol, Schwefel, Thiabendazol, Aspergillus flavus NRRL 21882 (Afla-Guard^{®}) oder Bacillus subtilis var. Amyloliquefaciens-Stamm FZB24 (Taegro^{®}), Folpet, Bixafen, Boscalid, Bromuconazol, Cyflufenamid, Epoxiconazol, Fluindapyr, Fluopyram, Fluoxytioconazol, Fluchinconazol, Fluxapyroxad, Inpyrfluxam, Ipconazol, Isoflucypyram, Kresoxim-methyl, Mancozeb, Mefentrifluconazol, Metconazol, Metrafenon, Metyltetraprol, Penthiopyrad, Picoxystrobin, Prochloraz, Prochinazid, Pyraclostrobin, Spiroxamin, Tebuconazol, Tetraconazol, Trifloxystrobin, Triticonazol, Fluoxapiprolin, Ipfentrifluconazol, Sedaxan, Cyclobutrifluram, Flufenoxadiazam, Quinofumelin, Isotianil, Mandestrobin, Fenpyrazamin, Ipflufenoquin, Tebufloquin, Tolprocarb, Dichlobentiazox.

8. Zusammensetzung nach Anspruch 7, wobei der zusätzliche fungizide Wirkstoff aus Benzovindiflupyr oder Pydiflumetofen ausgewählt ist und wobei der zusätzliche fungizide Wirkstoff in einem Gewichtsverhältnis, bezogen auf Florylpicoxamid, von 10:1 bis 1:10 und vorzugsweise einem Gewichtsverhältnis von 5:1 bis 1:5 vorhanden ist.

9. Zusammensetzung nach einem der Ansprüche 1 bis 8, weiterhin umfassend einen oder mehrere zusätzliche Bestandteile, ausgewählt aus: einem Frostschutzmittel, einem Antischaummittel, einem Verdickungsmittel, einem Biozid (Konservierungsmittel), einem Stabilisator, einem Pigment, einem wassermischbaren Lösungsmittel, einem nicht mit Wasser mischbaren Lösungsmittel und einem oder mehreren nichtionischen oder ionischen Emulgatoren.

10. Wässrige Zusammensetzung, umfassend die Zusammensetzung nach einem der Ansprüche 1 bis 9, gegebenenfalls weiterhin umfassend ein oder mehrere Adjuvantien oder Träger.

11. Verfahren zur Bekämpfung oder Prävention des Befalls einer Nutzpflanzenkultur durch phytopathogene Mikroorganismen, bei dem man eine fungizid wirksame Menge einer Zusammensetzung nach einem der Ansprüche 1 bis 10 auf die Pflanzen, auf Teile davon oder deren Standort ausbringt.

12. Verfahren nach Anspruch 11, wobei der phytopathogene Mikroorganismus aus Mycosphaerella graminicola (Septoria tritici), Puccinia recondita oder Puccinia striiformis ausgewählt ist und es sich bei der Pflanze um Getreide, insbesondere Weizen, handelt.

## Revendications

1. Composition fongicide comprenant :
(i) du florylpicoxamide en tant qu'ingrédient actif fongicide ; et
(ii) un acide organique choisi parmi un acide hydroxy mono-carboxylique aliphatique en C₂ à C₈ ou un acide di-ou tri-carboxylique aliphatique en C₂ à C₈, ou l'acide citrique,
la composition étant un concentré émulsifiable comprenant un émulsifiant alcoxylé.

2. Composition selon la revendication 1, dans laquelle le florylpicoxamide est présent à raison de 1 à 10 % en poids de la composition, et de préférence à raison de 3 à 6 % en poids de la composition.

3. Composition selon la revendication 1 ou la revendication 2, dans laquelle l'acide organique est présent à raison de 0,02 à 1,5 % en poids de la composition, et de préférence à raison de 0,02 à 0,2 % en poids de la composition.

4. Composition selon l'une quelconque des revendications 1 à 3, la composition comprenant un solvant choisi parmi un diméthylamide d'acide gras en C₆ à C₁₂ ou un ester aromatique.

5. Composition selon l'une quelconque des revendications 1 à 4, dans laquelle l'acide organique est choisi parmi l'acide glycolique, l'acide oxalique, l'acide malonique, l'acide adipique, l'acide maléique, l'acide lactique, l'acide subérique, l'acide 2-hydroxyoctanoïque, ou l'acide citrique.

6. Composition selon l'une quelconque des revendications 1 à 5, dans laquelle l'acide organique est l'acide lactique ou l'acide citrique.

7. Composition selon l'une quelconque des revendications 1 à 6, la composition comprenant un ou plusieurs ingrédients actifs fongicides supplémentaires choisis parmi :
benzovindiflupyr, isopyrazam, pydiflumetofen, azoxystrobine, difénoconazole, prothioconazole, chlorothalonil, fenpropidine, acibenzolar-S-méthyl, cyproconazole, cyprodinil, fenpropimorphe, propiconazole, hexaconazole, penconazole, pyrifénox, fludioxonil, pyroquilon, tricyclazole, fluazinam, mandipropamide, métalaxyl, métalaxyl-M, oxadixyl, oxathiapiproline, paclobutrazol, soufre, thiabendazole, Aspergillus flavus NRRL 21882 (Afla-Guard^{®}) ou Bacillus subtilis var. amyloliquefaciens souche FZB24 (Taegro^{®}), folpet, bixafen, boscalid, bromuconazole, cyflufenamid, époxiconazole, fluindapyr, fluopyram, fluoxytioconazole, fluquinconazole, fluxapyroxad, inpyrfluxam, ipconazole, isoflucypyram, kresoxim-méthyl, mancozeb, méfentrifluconazole, metconazole, métrafenone, méthyltétraprole, penthiopyrad, picoxystrobine, prochloraz, proquinazid, pyraclostrobine, spiroxamine, tébuconazole, tétraconazole, trifloxystrobine, triticonazole, fluoxapiprolin, ipfentrifluconazole, sédaxane, cyclobutrifluram, flufénoxadiazam, quinofumélin, isotianil, mandestrobine, fenpyrazamine, ipflufénoquine, tébufloquine, tolprocarb, dichlobentiazox.

8. Composition selon la revendication 7, l'ingrédient actif fongicide supplémentaire étant choisi parmi benzovindiflupyr ou pydiflumétofène, et l'ingrédient actif fongicide supplémentaire étant présent en un rapport en poids par rapport au florylpicoxamide de 10:1 à 1:10, et de préférence en un rapport en poids de 5:1 à 1:5.

9. Composition selon l'une quelconque des revendications 1 à 8, comprenant en outre un ou plusieurs ingrédients supplémentaires choisis parmi : un agent antigel, un agent antimousse, un agent épaississant, un biocide (conservateur), un stabilisant, un pigment, un solvant miscible à l'eau, un solvant non miscible à l'eau et un ou plusieurs émulsifiants non ioniques ou ioniques.

10. Composition aqueuse comprenant la composition selon l'une quelconque des revendications 1 à 9, comprenant en outre éventuellement un ou plusieurs adjuvants ou supports.

11. Procédé de lutte ou de prévention contre une infestation d'une culture d'une plante utile par des micro-organismes phytopathogènes, dans lequel une quantité efficace sur le plan fongicide d'une composition selon l'une quelconque des revendications 1 à 10, est appliqué sur les plantes, sur des parties de celles-ci ou sur le site de celles-ci.

12. Procédé selon la revendication 11, dans lequel le microorganisme phytopathogène est choisi parmi Mycosphaerella graminicola (Septoria tritici), Puccinia recondita ou Puccinia striiformis, et la plante est des céréales, en particulier du blé.
